# EUROPÄISCHE PATENTSCHRIFT

(11) **EP 2 228 283 B1**
(45) Veröffentlichungstag und Bekanntmachung des Hinweises auf die Patenterteilung: **01.01.2014**
(21) Anmeldenummer: 10002546.9
(22) Anmeldetag: 11.03.2010
(51) Int. Cl.: B62D 5/00

(54) **Verfahren zum Erfassen des Gehalten- oder Nichtgehaltenwerdens einer Lenkhandhabe, Verfahren zum Betreiben eines Fahrerassistenzsystems sowie Kraftfahrzeug**
Method for recording whether a steering handle is held or not, method for operating a driver assistance system and motor vehicle
Procédé d'enregistrement du maintien ou du non maintien d'un volant de direction, procédé de fonctionnement d'un système d'assistance au conducteur ainsi que véhicule automobile

(30) Priorität: 11.03.2009 DE 102009012601
(43) Veröffentlichungstag der Anmeldung: 15.09.2010
(73) Patentinhaber: AUDI AG, 85045 Ingolstadt (DE)
(72) Erfinder: Stemmer, Martin, 85445 Niederding (DE)
(74) Vertreter: Patzelt, Heike Anna Maria

(56) Entgegenhaltungen:
- DE-A1-102006 035 369
- US-A1- 2008 262 676

## Beschreibung

Die Erfindung betrifft ein Verfahren zum Erfassen, ob in einem Kraftfahrzeug ein Fahrzeugführer eine Lenkhandhabe (fest-)hält. Sie betrifft auch ein Verfahren zum Betreiben eines Fahrerassistenzsystems, für dessen Betrieb eine Aussage über das Gehalten- oder Nichtgehaltensein einer Lenkhandhabe nötig oder nützlich ist. Schließlich betrifft die Erfindung auch ein Kraftfahrzeug, in dem Einrichtungen zum Durchführen der erfindungsgemäßen Verfahren bereitgestellt sind.

Die Erfindung geht hierbei davon aus, dass eine Lenkhandhabe des Kraftfahrzeugs mit einer ersten Welle gekoppelt, typischerweise unmittelbar verbunden ist. Die erste Welle greift in ein Überlagerungsgetriebe ein, an dessen Ausgangsseite eine zweite Welle bereitgestellt ist, so dass eine Drehung der ersten Welle vermittels der Lenkhandhabe eine Drehung der zweiten Welle bewirkt. Die zweite Welle ist mit den Rädern gekoppelt. Außerhalb dieses eigentlichen Lenkstrangs ist noch eine dritte Welle bereitgestellt, die ebenfalls als Eingang in das Überlagerungsgetriebe eingreift, also in dieses hineingeführt ist. Der dritten Welle ist ein gesonderter Motor zugeordnet, der typischerweise als Elektromotor ausgebildet ist, vermittels dem der dritten Welle eine Drehung aufprägbar ist. Die Drehung wird herkömmlicherweise zum Zweck einer Unterstützung des Fahrzeugführers beim Lenken aufgeprägt, soll sich also in einer Drehung der zweiten Welle auswirken. Vorliegend soll es Eigenschaft des Überlagerungsgetriebes sein, dass sich eine Drehung der dritten Welle unter bestimmten Umständen auch in einer Drehung der ersten Welle und damit der Lenkhandhabe auswirken kann. Diese Eigenschaft ist bei herkömmlichen Überlagerungsgetrieben stets vorhanden, zum Beispiel bei Planetengetrieben oder Getrieben, die unter dem Markennamen "harmonic drive" erhältlich sind.

Manche Fahrerassistenzsysteme, die selbsttätig oder aufgrund von Anforderung durch den Kraftfahrzeugführer einen Eingriff in den Betrieb des Kraftfahrzeugs vornehmen, sollten einen solchen Eingriff nur unter vorbestimmten Nebenbedingungen vornehmen. Manche Eingriffe eines Fahrerassistenzsystems bei voller Fahrt des Kraftfahrzeugs können gefährlich sein, wenn der Fahrzeugführer die Lenkhandhabe gerade nicht festhält. Dies gilt insbesondere bei Fahrerassistenzsystemen, die einen Einfluss auf die Lenkstellung haben, wie dies zum Beispiel bei Spurhalteassistenten der Fall ist. Umgekehrt ist es bei einer automatischen Einparkhilfe: Diese dreht selbsttätig die Räder und damit auch die Lenkhandhabe. Dann ist es wünschenswert, wenn der Fahrzeugführer die Lenkhandhabe nicht festhält.

Soweit bisher beim Betrieb von Fahrerassistenzsystemen nicht in Kauf genommen wird, dass gerade die nicht gewünschte Situation des Gehaltenseins oder Nichtgehaltenseins der Lenkhandhabe vorliegt, wird im Stand der Technik mittels gesondert bereitgestellten Sensoren erfasst, ob der Fahrzeugführer eine Lenkhandhabe hält. Bei Lenkrädern sind hierzu zum Beispiel kapazitive Sensoren im Lenkkranz vorgesehen. Bei einer anderen Lösung aus dem Stand der Technik erfolgt eine Frequenzanalyse betreffend Schwingungen im Lenkstrang. Solche Schwingungen werden unter bestimmten Umständen bei der Fahrt, zum Beispiel bei unebener Strecke, eingetragen. Ist das Lenkrad frei, so erfolgt eine Schwingung mit der Eigenfrequenz. Die Frequenz der Schwingung ändert sich, wenn das Lenkrad durch den Fahrzeugführer festgehalten wird.

Ein Überblick über die zum Zeitpunkt des Anmeldetags der vorliegenden Anmeldung aktuellste Entwicklung, was die Lenkung angeht, gibt der Artikel "Dynamiklenkung im Audi Q5" von W. Dick, M. Lannoije, J. Schuller und M. Reutter, erschienen in einer Sonderausgabe von ATZ und MTZ im Juni 2008, Seiten 66 bis 73. US 2008/262676 und DE 10 2006 035 369 offenbaren ein Verfahren zum Erfassen ob in einem Kfz. ein Fahrzeugführer eine Lenkhandhabe hält.

Das Bereitstellen gesonderter Sensoren zum Erfassen des Gehaltenseins der Lenkhandhabe ist aufwändig und teuer. Die bisherigen Verfahren sind nur unter Verwendung gesonderter Einrichtungen durchführbar und auch nicht für alle Fahrsituationen geeignet. Die Frequenzanalyse kann zum Beispiel nicht mit ausreichender Genauigkeit genutzt werden, wenn das Fahrzeug vermittels einer automatischen Einparkhilfe eingeparkt werden soll und hierzu steht, denn dann werden naturgemäß keine Schwingungen in den Lenkstrang eingetragen.

Es ist somit Aufgabe der Erfindung, ein Verfahren zum Erfassen, ob in einem Kraftfahrzeug ein Fahrzeugführer eine Lenkhandhabe hält, bereitzustellen, das wirksam durchführbar ist, ohne dass es des Einsatzes gesonderter teurer Mittel bedürfte. Es ist auch Aufgabe der Erfindung, das Betreiben eines Fahrerassistenzsystems zu ermöglichen, in dem ein solches Verfahren eingesetzt wird. So soll auch ein Kraftfahrzeug mit zur Durchführung der Verfahren geeigneten Einrichtungen bereitgestellt werden.

Die Aufgabe wird durch ein Verfahren mit den Schritten gemäß Patentanspruch 1 und ein Verfahren mit den Schritten gemäß Patentanspruch 5 gelöst. Zur Lösung der Aufgabe gehört auch die Bereitstellung eines Kraftfahrzeugs mit den Merkmalen gemäß Patentanspruch 6.

Das erfindungsgemäße Verfahren ist somit in einem Kraftfahrzeug der eingangs geschilderten Art mit Überlagerungsgetriebe einsetzbar und gekennzeichnet durch die im Folgenden erläuterten Schritte: Bei dem Verfahren wird zunächst die dritte Welle mit einer Drehung um einen Testwinkel beaufschlagt. Dieser Testwinkel soll dadurch ausgezeichnet sein, dass er unabhängig vom Zustand der Lenkhandhabe festgelegt ist: Anders als beim herkömmlichen Betrieb wird somit nicht in Abhängigkeit von dem Lenkwinkel ein Zusatzwinkel vorgesehen und so durch die Überlagerung ein insgesamt größerer oder kleinerer Drehwinkel der zweiten Welle und damit der Räder erzielt, sondern der Testwinkel wird gerade auch dann vorgesehen, wenn kein Lenkwinkel oder keine Änderung des Lenkwinkels erfasst wird. Zum erfindungsgemäßen Verfahren gehört ferner das Gewinnen von Signalen zum Ermöglichen der Aussage, ob durch das Beaufschlagen entweder a) eine Drehung der ersten Welle (und damit der Lenkhandhabe) erfolgt oder b) eine Drehung der zweiten Welle erfolgt. Die Signale ermöglichen diese Aussage insbesondere im Rahmen einer Auswertung, die dann auch erfolgt, so dass die gewünschte Aussage gewonnen wird. Im Falle a) wird aus der Drehung der ersten Welle abgeleitet, dass die Lenkhandhabe nicht gehalten ist, denn es ist nicht zu erwarten, dass der Fahrzeugführer eine automatische Drehung der Lenkhandhabe zulässt; lässt er es zu, hält er die Lenkhandhabe jedenfalls nicht gemäß dem hier vorgenommenen Kriterium ausreichend fest. Im Falle b), dass nämlich eine Drehung der zweiten Welle erfolgt, wird abgeleitet, dass die Lenkhandhabe gehalten ist. Dann setzt nämlich der Fahrzeugführer der Drehung der ersten Welle einen Widerstand entgegen, der größer als der Widerstand der zweiten Welle mit den nachgeordneten Rädern ist, so dass dann eben die zweite Welle mit den Rädern gedreht wird.

Das erfindungsgemäße Verfahren nutzt die bei Bereitstellung eines Überlagerungsgetriebes ohnehin vorhandenen Einrichtungen. Das Beaufschlagen der dritten Welle mit einer Drehung um einen Testwinkel ist äußerst unaufwändig, weil bereits im normalen Betrieb die dritte Welle mit Drehungen um vorgegebene Winkel, normalerweise um Zusatzwinkel zu einem Lenkwinkel, beaufschlagt wird.

Bei bevorzugten Ausführungsformen des Verfahrens können in dem Kraftfahrzeug ohnehin üblicherweise verbaute Sensoren zum Gewinnen der Signale eingesetzt werden.

Bei einer bevorzugten Ausführungsform wird das Verfahren in einem Kraftfahrzeug durchgeführt, in dem durch einen Lenksensor der Drehwinkel der Lenkhandhabe erfassbar ist. Der Lenksensor kann auch den Drehwinkel der ersten Welle erfassen, dieser ist aber ohnehin mit dem Drehwinkel der Lenkhandhabe identisch. Signale genau des ohnehin vorhandenen Lenksensors werden dann erfasst und daraufhin ausgewertet, ob a) eine Drehung der ersten Welle gemessen wird oder b) keine Drehung der ersten Welle gemessen wird. Aus der Tatsache, dass keine Drehung der ersten Welle gemessen wird, lässt sich dann für die Zwecke des Verfahrens zwingend schließen, dass eine Drehung der zweiten Welle erfolgt.

Bei einer zweiten Ausführungsform des Verfahrens ist ein Kraftfahrzeug vorausgesetzt, das eine Hilfskraftlenkung (Hilfskraftunterstützung) aufweist. In diesem Fall ist die zweite Welle über eben ein eine Hilfskraft bereitstellendes System, das einen Elektromotor mit einem Rotor umfasst, mit Rädern gekoppelt. In solchen Systemen, die in einer so genannten Servolenkung eingesetzt werden, ist dem Elektromotor typischerweise ein Lagesensor zugeordnet, der die Lage des Rotors erfasst. Bei dem Verfahren werden dann die Signale des ohnehin vorhandenen Lagesensors erfasst und daraufhin ausgewertet, ob a) sich der Rotor aufgrund des Testwinkels nicht dreht, oder ob b) der Rotor sich aufgrund des Testwinkels dreht. Der Rotor dreht sich dann und nur dann, wenn sich die zweite Welle dreht: Dreht sich der Rotor nicht, bedeutet dies für die Zwecke des vorliegenden Verfahrens zwingend, dass sich die zweite Welle nicht dreht und somit aufgrund des Testwinkels eine Drehung der ersten Welle erfolgt. Dreht sich der Rotor aufgrund des Testwinkels, bedeutet dies für die Zwecke des vorliegenden Verfahrens zwingend, dass eine Drehung der zweiten Welle erfolgt.

Bei einer dritten Ausführungsform des Verfahrens ist von einem Kraftfahrzeug ausgegangen, das sowohl über den Lenksensor als auch über die Hilfskraftunterstützung mit Lagesensor am Elektromotor verfügt. Dann werden bei dem Verfahren Signale sowohl des ohnehin vorhandenen Lenksensors als auch des ohnehin vorhandenen Lagesensors erfasst und daraufhin ausgewertet, ob a) eine Drehung der ersten Welle gemessen wird und sich zugleich der Rotor aufgrund des Testwinkels nicht dreht, woraus für die Zwecke des Verfahrens zwingend auf eine Nichtdrehung der zweiten Welle geschlossen wird, wobei ferner ausgewertet wird, ob b) keine Drehung der ersten Welle gemessen wird und sich zugleich der Rotor aufgrund des Testwinkels dreht, woraus für den Zweck des Verfahrens zwingend geschlossen wird, dass sich ausschließlich die zweite Welle dreht, und wobei eventuell ebenfalls ermittelt wird, ob c) weder Fall a) noch b) gegeben sind. Im Fall a) kann dann ganz einfach abgeleitet werden, dass die Lenkhandhabe nicht gehalten ist, in Fall b) ganz einfach abgeleitet werden, dass die Lenkhandhabe gehalten ist. Im bei realen Systemen kaum oder nicht vorkommenden Fall c) bedeutet dies, dass das Verfahren einen Zweifelsfall aufgedeckt hat, woraufhin zum Beispiel eine Fehlermeldung abgegeben wird, etwa an den Fahrer, damit dieser sein Verhalten ändert und die Lenkhandhabe anfasst oder loslässt, je nach Situation; alternativ kann die Fehlermeldung intern an ein Fahrerassistenzsystem abgegeben werden. Genauso kann im Fall c) auch ein vorbestimmter Zustand des Haltens der Lenkhandhabe zugeordnet werden. Wird das Verfahren zu dem Zweck durchgeführt, dass ein Fahrerassistenzsystem nur in einem ganz bestimmten Zustand eingreift, dann wird gerade nicht dieser ganz bestimmte Zustand zugeordnet, sondern als vorbestimmter Zustand der Zustand zugeordnet, in dem das Fahrerassistenzsystem nicht eingreifen soll. Bei einem Spurhaltesystem wird beispielsweise im Zweifelsfall c) von einem Nichtgehaltensein des Lenkrads ausgegangen, so dass Eingriffe des Spurhaltesystems unterbunden werden. Bei einer automatischen Einparkhilfe wird umgekehrt im Zweifelsfall c) davon ausgegangen, dass das Lenkrad gehalten ist, so dass ein Einparken mit der Drehung des Lenkrads unterbleibt. Gegebenenfalls kann der Schritt des Zuordnens mit einer Fehlermeldung einhergehen, wobei selbige dann auch aufgrund des Zugeordnetseins mittelbar durch das Fahrerassistenzsystem veranlasst werden kann.

Das erfindungsgemäße Verfahren zum Betreiben eines Fahrerassistenzsystems geht davon aus, dass es einen von dem Fahrerassistenzsystem zu veranlassenden Vorgang gibt, für den ein Zustand des Gehaltenseins oder Nichtgehaltenseins einer Lenkhandhabe durch den Fahrzeugführer festgelegt ist. Das Verfahren umfasst dann, dass in einer Situation, in der der Vorgang vorgesehen ist, das erfindungsgemäße Verfahren zum Erfassen durchgeführt wird und in Abhängigkeit vom Ergebnis des Verfahrens zum Erfassen der Vorgang veranlasst wird oder nicht. Ist für den zu veranlassenden Vorgang vorgesehen, dass dieser nur durchgeführt wird, wenn die Lenkhandhabe vom Fahrzeugführer gehalten ist, dann wird der Vorgang eben auch nur dann veranlasst, wenn das Verfahren zum Erfassen als Ergebnis hat, dass der Fahrzeugführer die Lenkhandhabe hält, und umgekehrt unterbleibt ein Veranlassen des Vorgangs, wenn Ergebnis des Verfahrens zum Erfassen ist, dass der Fahrzeugführer die Lenkhandhabe nicht hält.

Das erfindungsgemäße Kraftfahrzeug weist die bereits eingangs dargestellten Eigenschaften auf, insbesondere ein Überlagerungsgetriebe mit zugehörigem Aufbau des Lenkstrangs und Elektromotor zum zusätzlichen Drehen der Räder des Kraftfahrzeugs. Das Kraftfahrzeug weist ferner zumindest eine Einrichtung zum zumindest mittelbaren Messen einer Drehung der ersten oder der zweiten Welle (des Lenkstrangs) auf. Zusätzlich weist das Kraftfahrzeug noch eine Steuereinrichtung zur Abgabe von Steuersignalen an weitere Einheiten in einem Fahrerassistenzmodus auf. Erfiridungsgemäß ist die Steuereinrichtung dazu ausgelegt, eine Drehung der dritten Welle um einen Testwinkel zu bewirken und Signale von der zumindest einen Einrichtung auszuwerten, um abzuleiten, ob der Fahrerassistenzmodus nach einem vorbestimmten Kriterium eingenommen werden darf oder nicht.

Die erfindungsgemäße Steuereinrichtung bewirkt somit eine Durchführung des erfindungsgemäßen Verfahrens zum Erfassen und gleichzeitig des Verfahrens zum Betreiben eines Fahrerassistenzsystems.

Die Steuereinrichtung kann in Form eines einzigen Steuergeräts bereitgestellt sein, kann jedoch auch eine Mehrzahl von, zum Beispiel über einen Datenbus, miteinander gekoppelten Steuergeräten umfassen. So kann sie das Steuergerät umfassen, das dem Elektromotor für die Bereitstellung eines Überlagerungswinkels zugeordnet ist, und gleichzeitig das Steuergerät umfassen, das für das Fahrerassistenzsystem zuständig ist.

Als Einrichtung zum Messen kommt der oben bereits erwähnte Lenkwinkelsensor oder Lenksensor infrage und genauso auch bei einem Kraftfahrzeug mit einem eine Hilfskraft bereitstellende System der Lagesensor zum Erfassen der Lage des Rotors des zu dem eine Hilfskraft bereitstellenden Systems zugehörigen Elektromotors. Die Steuereinrichtung kann bei Vorhandensein von diesen beiden Sensoren in dem Kraftfahrzeug somit mit jeweils einem der Sensoren oder mit beiden gekoppelt sein, um entsprechend Signale auszuwerten.

Nachfolgend wird eine bevorzugte Ausführungsform der Erfindung unter Bezug auf die Zeichnung beschrieben, wobei
- Fig. 1: schematisch ein Kraftfahrzeug veranschaulicht, bei dem das erfindungsgemäße Verfahren einsetzbar ist, und
- Fig. 2: nach Art eines Flussdiagramms das dem erfindungsgemäßen Verfahren zugrunde liegende Konzept veranschaulicht.

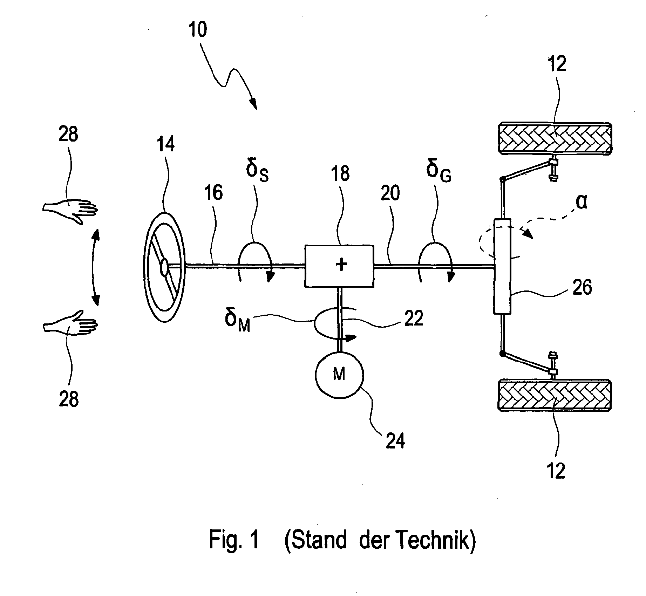

In einem in Fig. 1 gezeigten Kraftfahrzeug 10, von dem die zur Beschreibung der Erfindung wesentlichen Teile gezeigt sind, können Räder 12 durch ein Lenkrad 14 gedreht werden. Das Lenkrad 14 ist mit einer ersten Welle 16 gekoppelt und prägt dieser einen Lenkwinkel δ_{S} auf. Der Lenkwinkel δ_{S} beziehungsweise ein zugehöriges Drehmoment wird in ein Überlagerungsgetriebe 18 eingeleitet, zum Beispiel in ein Wellgetriebe oder auch in ein Planetengetriebe. Das Überlagerungsgetriebe 18 weist ausgangsseitig eine zweite Welle 20 auf, die sich um einen Winkel δ_{G} dreht. Kennzeichen des Überlagerungsgetriebes 18 ist es, dass von ihm ein Winkel δ_{M} über eine dritte Welle 22 einleitbar ist, nämlich unter der Wirkung eines Elektromotors 24. Im herkömmlichen Betrieb wird durch einen in Fig. 1 nicht gezeigten Lenkwinkelsensor der Winkel δ_{S} gemessen, und in Abhängigkeit von den Messwerten legt eine Steuereinheit einen Zusatzwinkel δ_{M} fest. Der Winkel δ_{G} ergibt sich dann, typischerweise durch einfache Addition, aus den Winkeln δ_{S} und δ_{M}.

Vorliegend soll das Kraftfahrzeug 10 noch eine Hilfskraftunterstützung 26 aufweisen. Hierbei handelt es sich um ein eine Hilfskraft bereitstellendes System, durch das die auf die Räder aufgrund der Lenkradbetätigung und der Aktion des Elektromotors 24 erzeugte Kraft zur Seite der Räder 12 hin verstärkt wird. Die Hilfskraftunterstützung 26 weist einen in Fig. 1 nicht gezeigten Elektromotor auf, dessen Rotorlage durch einen geeigneten, ebenfalls in Fig. 1 nicht gezeigten Sensor erfassbar ist. Die Rotorlage kann durch den Winkel α angegeben werden. Aus α lässt sich unmittelbar auf δ_{G} schließen.

Es soll nun in einem Kraftfahrzeug 10 gemäß Fig. 1 erfasst werden, ob sich die Hände 28 des Fahrzeugführers an dem Lenkrad 14 befinden oder, wie in Fig. 1 dargestellt, nicht an dem Lenkrad 14 befinden.

Es ist vorgesehen, dass in einer Situation, in der festgestellt werden soll, wo die Hände 28 das Lenkrad 14 halten oder nicht, veranlasst wird, dass der Motor 24, auch wenn kein Lenkwinkel δ_{S} vorliegt, die dritte Welle 22 mit einem Winkel δ_{M} beaufschlagt, der somit in das Überlagerungsgetriebe 18 eingetragen wird. Es wird die Wirkung des Testwinkels an zumindest einem Sensor überprüft.

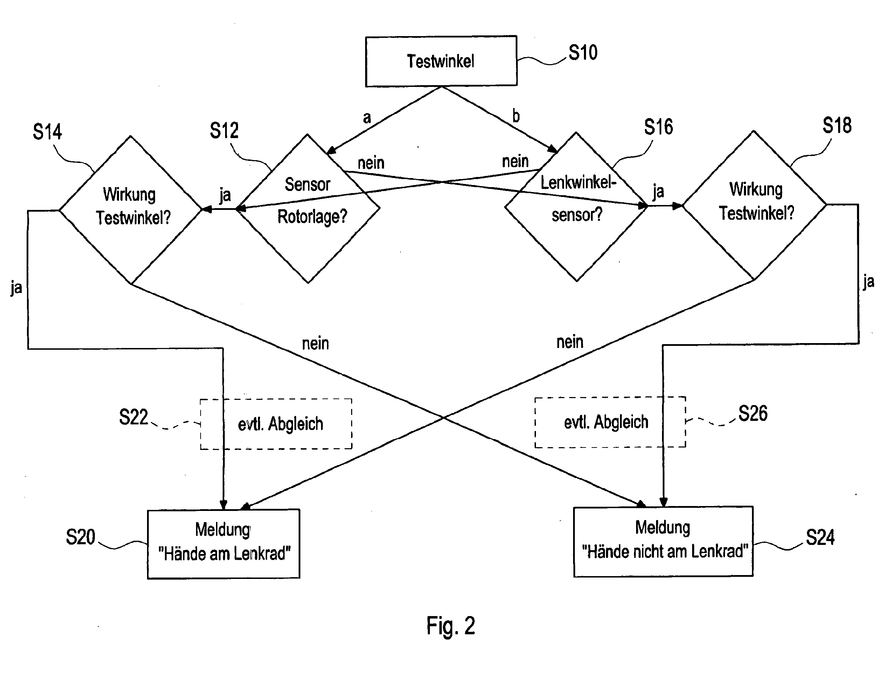

Fig. 2 veranschaulicht dieses Konzept. In Schritt S10 wird der Testwinkel auf die Welle 22 gegeben. Es kann nun zwischen zwei Alternativen a und b unterschieden werden, die dem Konzept zugrunde liegen. Die Alternativen a und b sind jedoch nicht ausschließend, sondern können zugleich durchlaufen werden. Bei Alternative a wird in Schritt S12 geprüft, ob ein Sensor im Kraftfahrzeug vorhanden ist, der die Rotorlage misst, wobei es um die Rotorlage eines Rotors in einem Elektromotor einer Hilfskraftunterstützung geht. Falls ein solcher Sensor vorhanden, kann in Schritt S14 geprüft werden, ob der Testwinkel S10 eine Wirkung auf die Rotorlage hat oder nicht. Bei der Alternative b wird in Schritt S16 geprüft, ob ein Lenkwinkelsensor vorliegt, so wie dies oben für das Kraftfahrzeug 10 beschrieben worden war. Falls ein Lenkwinkelsensor vorliegt, wird in Schritt S18 geprüft, ob der Testwinkel einen Einfluss auf den Lenkwinkel hat.

Bei den Prüfungen gemäß Schritt S12 und S16 kann bei negativem Ausgang jeweils genauso vorgegangen werden, wie wenn die jeweils andere Prüfung S16 beziehungsweise S12 zum positiven Ergebnis geführt hat. Formal gesehen führt somit der Strang von dem "Nein" von Schritt S12 zum "Ja" von Schritt S16 und umgekehrt. Sind sowohl ein Lenkwinkelsensor als auch ein Sensor für die Rotorlage in einer Hilfskraftunterstützung vorhanden, kann gleichzeitig gemäß Alternative a und gemäß Alternative b vorgegangen werden, so dass man beide Male zum Ergebnis "Ja" gelangt und zugleich bei den Schritten S14 und S18 anlangt.

Wird im Schritt S14 eine Wirkung der Beaufschlagung der dritten Welle 22 mit einem Testwinkel auf die Rotorlage erkannt, bedeutet dies, dass der Fahrzeugführer seine Hände 28 am Lenkrad 14 hat und die zweite Welle 20 mit dem nachgeordneten Pfad aus Hilfskraftunterstützung 26 und weiteren Einheiten bis zu den Rädern 12 einen geringeren Widerstand bietet als es das Lenkrad 14 aufgrund seines Gehaltenseins durch den Fahrzeugführer tut. Wird in Schritt S10 der Testwinkel δ_{M,Test} zugegeben, so gilt αₙₑᵤ = αₐₗₜ + α(δ_{M,Test}) und gleichzeitig δ_{S,neu} = δ_{S,alt}. Somit wird bei positiver Beantwortung der in Schritt S14 gestellten Frage eine Meldung in Schritt S20 abgegeben, dass sich die Hände am Lenkrad befinden. Zum gleichen Ergebnis kommt man, wenn der Lenkwinkelsensor keine Wirkung aufgrund des Testwinkels hat, denn dann dreht sich das Lenkrad 14 nicht, woraus unmittelbar darauf zurückgeschlossen werden kann, dass sich die zweite Welle 20 dreht. Im Falle, dass die Schritte S14 und S18 zugleich erfolgen, kann in einem Zwischenschritt S22 noch ein Abgleich erfolgen und eine Weiterleitung zur Meldung gemäß Schritt S20 nur bei positivem Ausgang des Abgleichs erfolgen.

Hat der Fahrzeugführer wie in Fig. 1 gezeigt seine Hände 28 nicht am Lenkrad 14, so bietet die erste Welle 16 mit dem Lenkrad 14 einen geringeren Widerstand als die zweite Welle 20 bis zu den Rädern 12 hin. Daher dreht sich aufgrund der Beaufschlagung der dritten Welle 22 mit einem Testwinkel gemäß Schritt S10 die erste Welle 16 und damit das Lenkrad 14. Wird in Schritt S10 der Testwinkel δ_{M,Test} zugegeben, so gilt also δ_{S,neu} = δ_{S,alt} + δ_{S}(δ_{M,Test}), gleichzeitig gilt αₙₑᵤ = αₐₗₜ. Der Lenkwinkelsensor misst somit eine Wirkung, gleichzeitig misst der Sensor für die Rotorlage keine Wirkung. Von dem Schritt S18 geht daher der positive Pfad zum Schritt S24, genauso wie der negative Pfad von Schritt S14, demgemäß eine Meldung abgegeben wird, dass die Hände sich nicht am Lenkrad befinden. Auch hier kann eventuell in einem Zwischenschritt S26 ein Abgleich erfolgen.

Der Abgleich kann grundsätzlich auf Grundlage von beliebigen Signalen beider Sensoren vorgesehen sein, bei negativem Ausgang kann eine Fehlermeldung erfolgen. Dieser negative Ausgang ist in Fig. 2 aus Gründen der Darstellung nicht vorgesehen. In der Praxis können einfach die Ausgangssignale beider Sensoren einer gemeinsamen Einheit zugeführt werden.

In Fig. 2 ist in den Schritten S20 und S24 von einer "Meldung" die Rede. Dies kann eine Meldung an ein Fahrerassistenzsystem sein. Eine Meldung kann zwischen unterschiedlichen Steuereinrichtungen als Signal übermittelt werden, zum Beispiel von einem Steuergerät, das mit den Sensoren (beziehungsweise einem Sensor) gekoppelt ist und gleichzeitig den Motor 24 ansteuert, zu einem Steuergerät, das für das Fahrerassistenzsystem zuständig ist. Die Durchführung des Verfahrens, dessen Grundkonzept anhand von Fig. 2 erläutert wurde, kann jedoch auch durch dasselbe Steuergerät erfolgen, das für eine Fahrerassistenz erforderlich ist. In diesem Fall erfolgt eine Meldung im Sinne der Schritte S20 und S24 lediglich durch interne Weitergabe von Daten von einem Softwarebaustein zu einem anderen.

Das Verfahren benutzt lediglich den Motor 24 und einen oder mehrere Sensoren, welche ohnehin vorhanden sind. Zum Zwecke der Erfassung, ob der Fahrzeugführer das Lenkrad hält oder nicht, müssen daher keine gesonderten Mittel bereitgestellt werden, außer dass eine Steuereinrichtung geeignet programmiert werden muss. Das Verfahren ist daher kostengünstig und zudem effizient.

## Patentansprüche

1. Verfahren zum Erfassen, ob in einem Kraftfahrzeug (10) ein Fahrzeugführer (28) eine Lenkhandhabe (14) hält, wobei in dem Kraftfahrzeug (10) vermittels der Lenkhandhabe (14) eine erste Welle (16) drehbar ist, die über ein Überlagerungsgetriebe (18) die Drehung einer zweiten Welle (20) bewirkt, die mit Rädern (12) gekoppelt ist, wobei in das Überlagerungsgetriebe (18) auch eine dritte Welle (22) hineingeführt ist, der von einem gesonderten Motor (24) eine Drehung aufprägbar ist, die sich über das Überlagerungsgetriebe (18) in einer Drehung beider anderen Wellen (16, 20) auswirken kann,
wobei das Verfahren **gekennzeichnet ist durch**:
- Beaufschlagen der dritten Welle (24) mit einer Drehung um einen Testwinkel,
- Gewinnen von Signalen zum Ermöglichen der Aussage, ob **durch** das Beaufschlagen entweder a) eine Drehung der ersten Welle (16) erfolgt oder b) eine Drehung der zweiten Welle erfolgt,
- Auswerten der Signale und Gewinnen der Aussage,
- und im Falle a) Ableiten, dass die Lenkhandhabe (14) nicht gehalten ist,
und im Falle b) Ableiten, dass die Lenkhandhabe (14) gehalten ist.

2. Verfahren nach Anspruch 1, das in einem Kraftfahrzeug durchgeführt wird, in dem durch einen Lenksensor der Drehwinkel der Lenkhandhabe (14) beziehungsweise der ersten Welle (16) erfassbar ist, wobei Signale des Lenksensors erfasst und daraufhin ausgewertet werden, ob a) eine Drehung der ersten Welle (16) gemessen wird oder b) keine Drehung der ersten Welle (16) gemessen wird.

3. Verfahren nach Anspruch 1, das in einem Kraftfahrzeug durchgeführt wird, in dem die zweite Welle (20) über ein eine Hilfskraft bereitstellendes System (26), das einen Elektromotor mit einem Rotor umfasst, mit Rädern (12) gekoppelt ist, wobei dem Elektromotor (24) ein Lagesensor zugeordnet ist, der die Lage des Rotors erfasst, wobei Signale des Lagesensors erfasst und daraufhin ausgewertet werden, ob a) sich der Rotor aufgrund des Testwinkels nicht dreht, oder ob b) der Rotor sich aufgrund des Testwinkels dreht.

4. Verfahren nach Anspruch 1, das in einem Kraftfahrzeug durchgeführt wird, in dem durch einen Lenkwinkelsensor der Drehwinkel der Lenkhandhabe (14) beziehungsweise der ersten Welle (16) erfassbar ist, und in dem die zweite Welle (20) über ein eine Hilfskraft bereitstellendes System (26), das einen Elektromotor mit einem Rotor umfasst, mit Rädern (12) gekoppelt ist, wobei dem Elektromotor ein Lagesensor zugeordnet ist, der die Lage des Rotors erfasst,
wobei Signale des Lenksensors und des Lagesensors erfasst und daraufhin ausgewertet werden, ob
a) eine Drehung der ersten Welle gemessen wird und sich zugleich der Rotor aufgrund des Testwinkels nicht dreht, ob
b) keine Drehung der ersten Welle (16) gemessen wird und sich zugleich der Rotor aufgrund des Testwinkels dreht,
wobei in Fall a) abgeleitet wird, dass die Lenkhandhabe (14) nicht gehalten ist, und in Fall b) abgeleitet wird, dass die Lenkhandhabe gehalten ist.

5. Verfahren zum Betreiben eines Fahrerassistenzsystems, bei dem für einen von dem Fahrerassistenzsystem zu veranlassenden Vorgang ein Zustand des Gehaltenseins oder Nichtgehaltenseins einer Lenkhandhabe durch den Fahrzeugführer festgelegt ist, wobei das Verfahren umfasst, dass in einer Situation, in der der Vorgang vorgesehen ist, das Verfahren zum Erfassen nach einem der vorhergehenden Ansprüche durchgeführt wird und in Abhängigkeit vom Ergebnis des Verfahrens zum Erfassen der Vorgang veranlasst wird oder nicht.

6. Kraftfahrzeug (10) mit einer Lenkhandhabe (14) zum Drehen von Rädern (12) des Kraftfahrzeugs, wobei die Lenkhandhabe (14) mit einer ersten Welle (16) gekoppelt ist, deren Drehung über ein Überlagerungsgetriebe (18) die Drehung einer zweiten (20) mit den Rädern (12) gekoppelten Welle (20) bewirkt, wobei in das Überlagerungsgetriebe (18) auch eine dritte Welle (22) hineingeführt ist, der von einem Elektromotor (24) eine Drehung aufprägbar ist, um die Räder (12) zusätzlich zu drehen,
mit zumindest einer Einrichtung zum zumindest mittelbaren Messen einer Drehung der ersten und/oder der zweiten Welle,
mit einer Steuereinrichtung zur Abgabe von Steuersignalen an weitere Einheiten in einem Fahrerassistenzmodus,
**dadurch gekennzeichnet, dass**
die Steuereinrichtung dazu ausgelegt ist, durch Ansteuerung des Elektromotors (24) eine Drehung der dritten Welle (22) um einen Testwinkel zu bewirken und Signale von der zumindest einen Einrichtung zum Messen zu empfangen und auszuwerten, um abzuleiten, ob der Fahrerassistenzmodus nach einem vorbestimmten Kriterium eingenommen werden darf oder nicht, wobei sich das vorbestimmte Kriterium darauf bezieht, ob die Lenkhandhabe (14) gehalten oder nicht gehalten ist.

7. Kraftfahrzeug nach Anspruch 6, bei dem eine Einrichtung zum Messen ein Lenkwinkelsensor ist.

8. Kraftfahrzeug nach Anspruch 6 oder Anspruch 7, bei dem die zweite Welle (20) über ein eine Hilfskraft bereitstellendes System (26), das einen Elektromotor mit einem Rotor umfasst, mit den Rädern (12) gekoppelt ist, wobei eine Einrichtung zum Messen durch einen Lagesensor zum Erfassen der Lage des Rotors bereitgestellt ist.

## Claims

1. Method for detecting whether, in a motor vehicle (10), a vehicle driver (28) is holding a steering handle (14), a first shaft (16) being rotatable in the motor vehicle (10) by means of the steering handle (14) and causing the rotation of a second shaft (20) by means of a superposition gearbox (18), which second shaft is coupled to wheels (12), a third shaft (22) also being introduced into the superposition gearbox (18) and rotation being inducible therein by a separate motor (24), which rotation can result by means of the superposition gearbox (18) in a rotation of the two other shafts (16, 20), the method being **characterised by**:
- applying a rotation about a test angle to the third shaft (24),
- obtaining signals for concluding whether the application has resulted in either a) a rotation of the first shaft (16) or b) a rotation of the second shaft,
- analysing the signals and obtaining the conclusion,
- and, in case a), inferring that the steering handle (14) is not being held and, in case b), inferring that the steering handle (14) is being held.

2. Method according to claim 1, which is carried out in a motor vehicle, wherein a steering sensor is able to detect the angle of rotation of the steering handle (14) in relation to the first shaft (16), wherein signals from the steering sensor are detected and then analysed to determine whether a) a rotation of the first shaft (16) is measured or b) no rotation of the first shaft (16) is measured.

3. Method according to claim 1, which is carried out in a motor vehicle, wherein the second shaft (20) is coupled to wheels (12) via a power-assistance system (26) comprising an electric motor having a rotor, wherein a position sensor which detects the position of the rotor is associated with the electric motor (24), wherein signals from the position sensor and detected and then analysed to determine whether a) the rotor is not rotating owing to the test angle or b) the rotor is rotating owing to the test angle.

4. Method according to claim 1, which is carried out in a motor vehicle, wherein a steering angle sensor can detect the angle of rotation of the steering handle (14) in relation to the first shaft (16), and wherein the second shaft (20) is coupled to wheels (12) via a power-assistance system (26) comprising an electric motor having a rotor, wherein a position sensor which detects the position of the rotor is associated with the electric motor, wherein signals from the steering sensor and the position sensor are detected and then analysed to determine whether
a) a rotation of the first shaft is measured and at the same time the rotor is not rotating owing to the test angle, or
b) no rotation of the first shaft (16) is measured and at the same time the rotor is rotating owing to the test angle,
wherein, in case a), it is inferred that the steering handle (14) is not being held and, in case b), it is inferred, that the steering handle is being held.

5. Method for operating a driver-assistance system, wherein, for any operation to be initiated by the driver-assistance system, it is established whether a steering handle is being held or not held by the vehicle driver, wherein the method comprises the detection method according to any of the preceding claims being carried out in a situation in which the operation is provided and the operation is initiated or not initiated depending on the outcome of the detection method.

6. Motor vehicle (10) comprising a steering handle (14) for rotating wheels (12) of the motor vehicle, the steering handle (14) being connected to a first shaft (16) of which the rotation causes the rotation of a second (20) shaft (20) by means of superposition gearbox (18), which second shaft is coupled to the wheels (12), a third shaft (22) also being introduced into the superposition gearbox (18) and rotation being inducible therein by a separate motor (24) to additionally rotate the wheels (12), comprising at least one means for at least indirectly measuring a rotation of the first and/or second shaft, comprising a control means for outputting control signals to other units in a driver-assistance mode, **characterised in that** the control means is designed to cause, by actuation of the electric motor (24), the third shaft (22) to rotate about a test angle and to receive and analyse signals from the at least one measuring means, in order to infer whether or not the driver-assistance mode should be assumed according to a predetermined criterion, the predetermined criterion relating to whether the steering handle (14) is being held or not held.

7. Motor vehicle according to claim 6, wherein one measuring means is a steering angle sensor.

8. Motor vehicle according to either claim 6 or claim 7, wherein the second shaft (20) is coupled to the wheels (12) via a power-assistance system (26) comprising an electric motor having a rotor, wherein one measuring means is provided by a position sensor for detecting the position of the rotor.

## Revendications

1. Procédé permettant d'enregistrer si, dans un véhicule automobile (10), un conducteur (28) maintient un volant de direction (14), dans lequel, dans le véhicule automobile (10), au moyen du volant de direction (14), on peut faire tourner un premier arbre (16) qui entraîne, via une transmission à superposition (18), la rotation d'un deuxième arbre (20), qui est couplé aux roues (12), dans lequel il est incorporé à la transmission à superposition (18) également un troisième arbre (22), auquel un moteur séparé (24) peut imposer une rotation qui peut entraîner, via la transmission à superposition (18), une rotation des deux autres arbres (16, 20),
dans lequel le procédé est **caractérisé par** les étapes consistant à :
- soumettre le troisième arbre (24) à une rotation d'un angle d'essai,
- obtenir des signaux permettant de confirmer si, du fait de cette soumission, il se produit a) une rotation du premier arbre (16) ou b) une rotation du deuxième arbre,
- évaluer les signaux et les gains de la confirmation, et,
- dans le cas a), en déduire que le volant de direction (14) n'est pas maintenu et,
dans le cas b), en déduire que le volant de direction (14) est maintenu.

2. Procédé selon la revendication 1, qui est réalisé dans un véhicule automobile, dans lequel, au moyen d'un capteur de direction, on peut enregistrer l'angle de rotation du volant de direction (14), éventuellement du premier arbre (16), dans lequel les signaux du capteur de direction sont enregistrés et évalués ensuite pour confirmer si a) une rotation du premier arbre (16) est mesurée ou b) aucune rotation du premier arbre (16) n'est mesurée.

3. Procédé selon la revendication 1, qui est réalisé dans un véhicule automobile, dans lequel le deuxième arbre (20) est couplé, via un système générateur d'une force auxiliaire (26), qui comprend un moteur électrique avec un rotor, aux roues (12), dans lequel est affecté au moteur électrique (24) un capteur de position, qui enregistre la position du rotor, dans lequel les signaux du capteur de position sont enregistrés et ensuite évalués pour confirmer si a) le rotor ne tourne pas en raison de l'angle d'essai ou b) si le rotor tourne en raison de l'angle d'essai.

4. Procédé selon la revendication 1, qui est réalisé dans un véhicule automobile, dans lequel on peut enregistrer, via un capteur d'angle de direction, l'angle de rotation du volant de direction (14), éventuellement du premier arbre (16), et dans lequel on couple le deuxième arbre (20) via un système générateur d'une force auxiliaire (26), qui comprend un moteur électrique avec un rotor, aux roues (12), dans lequel on affecte au moteur électrique un capteur de position qui enregistre la position du rotor,
dans lequel des signaux du capteur de direction et du capteur de position sont enregistrés et ensuite évalués pour confirmer si :
a) une rotation du premier arbre est mesurée et si, simultanément, le rotor ne tourne pas en raison de l'angle d'essai, si
b) aucune rotation du premier arbre (16) n'est mesurée et si le rotor tourne simultanément en raison de l'angle d'essai,
dans lequel, dans le cas a), on en déduit que le volant de direction (14) n'est pas maintenu et, dans le cas b), on en déduit que le volant de direction est maintenu.

5. Procédé d'exploitation d'un système d'assistance au conducteur, dans lequel, pour une opération à effectuer par le système d'assistance au conducteur, on établit un état du maintien ou du non-maintien d'un volant de direction par le conducteur du véhicule, dans lequel le procédé comprend le fait que, dans une situation, dans laquelle l'opération est prévue, on réalise le procédé d'enregistrement selon l'une quelconque des revendications précédentes et l'on effectue ou non l'opération en fonction du résultat du procédé d'enregistrement.

6. Véhicule automobile (10) comprenant un volant de direction (14) pour faire tourner les roues (12) du véhicule automobile, dans lequel le volant de direction (14) est couplé à un premier arbre (16), dont la rotation entraîne, via une transmission à superposition (18), la rotation d'un deuxième arbre (20) couplé aux roues (12), dans lequel on incorpore à la transmission à superposition (18) également un troisième arbre (22), auquel un moteur électrique (24) peut imposer une rotation pour faire tourner encore les roues (12),
au moins un dispositif pour la mesure au moins indirecte d'une rotation du premier et/ou du deuxième arbre,
un dispositif de commande pour délivrer des signaux de commande à d'autres unités dans un mode d'assistance au conducteur,
**caractérisé en ce que** :
le dispositif de commande est étudié de manière à entraîner, par commande du moteur électrique (24), une rotation du troisième arbre (22) d'un angle d'essai et à recevoir et évaluer des signaux du au moins un dispositif de mesure pour en déduire si le mode d'assistance au conducteur peut ou non être adopté selon un critère prédéterminé, dans lequel le critère prédéterminé se réfère au fait que le volant de direction (14) est maintenu ou non.

7. Véhicule automobile selon la revendication 6, dans lequel un dispositif de mesure est un capteur d'angle de direction.

8. Véhicule automobile selon la revendication 6 ou la revendication 7, dans lequel le deuxième arbre (20) est couplé, via un système générateur d'une force auxiliaire (26), qui comprend un moteur électrique avec un rotor, aux roues (12), dans lequel un dispositif de mesure est réalisé par un capteur de position pour enregistrer la position du rotor.
